# FASCICULE DE BREVET EUROPEEN

(11) **EP 2 273 158 B1**
(45) Date de publication et mention de la délivrance du brevet: **09.05.2012**
(21) Numéro de dépôt: 10168441.3
(22) Date de dépôt: 05.07.2010
(51) Int. Cl.: F16H 61/18, F16H 63/30

(54) **Système de commande pour une boîte de vitesses**
Steuersystem für Getriebe
Control system for a gearbox

(30) Priorité: 08.07.2009 FR 0954708
(43) Date de publication de la demande: 12.01.2011
(73) Titulaire: Peugeot Citroën Automobiles SA, 78140 Vélizy-Villacoublay (FR)
(72) Inventeur: Ploe, Pierre, 92800 PUTEAUX (FR)

(56) Documents cités:
- DE-C1- 19 511 510
- FR-A- 2 923 885
- GB-A- 2 037 914

## Description

La présente invention est relative à un système de commande pour une boîte de vitesses de véhicule, notamment de véhicule automobile.

En particulier l'invention est relative à un tel système comprenant des fourchettes associées à des engrenages de rapports de marche avant, des noix de commande associées aux fourchettes et un dispositif d'interverrouillage pouvant sélectivement actionner l'une desdites noix pour déplacer l'une des fourchettes et verrouiller les autres noix au point mort.

Un exemple de ce genre de système est connu du document FR2669391. Dans le système de ce document, un basculeur embarque un système de cliquet destiné à éviter le passage accidentel du rapport de marche arrière lors du passage du cinquième rapport au quatrième rapport de la boîte de vitesses, par guidage d'un doigt d'engagement et de dégagement de rapport. Le guidage est conçu pour que lors d'un tel passage de cinquième à quatrième, d'une part le doigt s'engage dans une crosse solidaire d'une fourchette servant au passage du quatrième rapport et d'autre part une ancre de verrouillage soit déplacée en s'opposant au basculement du basculeur sous l'action du doigt. Ce dispositif est relativement complexe et nécessite un ensemble de pièces réalisées et montées avec une grande précision pour être fiable.

Le document FR2923885 et EP0708277 proposent des systèmes dont la configuration des noix de cinquième rapport de marche avant et de rapport de marche arrière, avec des décalages de demi noix, nécessitent l'utilisation d'une grille de sélection de rapports ayant un décalage d'une demi-sélection du couloir de marche arrière par rapport au couloir de cinquième rapport, au préjudice de la compacité du système et de sa précision de manipulation.

On connaît également du document GB2037914, un système de commande de boîte de vitesses conforme au préambule de la revendication 1.

La présente invention a notamment pour but de proposer une alternative aux systèmes de l'art antérieur en évitant la dégradation de la boîte de vitesses lors des changements de rapport.

A cet effet, l'invention a pour objet un système de commande pour une boîte de vitesses de véhicule, notamment de véhicule automobile, conforme à la partie caractérisante de la revendication 1.

Dans divers modes de réalisation du système selon l'invention, on peut éventuellement avoir recours en outre à l'une et/ou à l'autre des dispositions suivantes :
- le système de désengagement comporte, à l'interface entre la clé d'interverrouillage et la noix de désengagement, un doigt escamotable permettant d'une part un mouvement coordonné de la clé d'interverrouillage et de la noix de désengagement pour amener la noix de désengagement à sa position de sélection et d'autre part un mouvement autonome de la noix de désengagement pour son passage de sa position de sélection à sa position de désengagement ;
- le doigt escamotable est solidaire de l'une parmi la clé d'interverrouillage et la noix de désengagement, une nervure de commande est solidaire de l'autre parmi la clé d'interverrouillage et la noix de désengagement et le doigt escamotable est en appui sur la nervure de commande pour amener la noix de désengagement à sa position de sélection ;
- la clé d'interverrouillage amène la noix de désengagement à sa position de sélection en l'actionnant perpendiculairement à la noix de commande associée à la fourchette du rapport de marche avant le plus élevé ;
- le doigt escamotable est dégagé de la nervure de commande afin de permettre le mouvement autonome de la noix de désengagement lors du désengagement du rapport de marche avant le plus élevé ;
- le doigt de commande actionne la noix de désengagement dans une direction parallèle à la noix de commande associée à la fourchette du rapport de marche avant le plus élevé pour actionner ladite noix de commande lors du désengagement de ce rapport ;
- la noix de désengagement est montée sur la noix de commande associée à la fourchette du rapport de marche avant le plus élevé, la noix de désengagement étant guidée à pivotement sur ladite noix de commande ;
- un dispositif de rappel tend à ramener la noix de désengagement à sa position de désengagement ;
- le dispositif de rappel est un ressort interposé entre la noix de désengagement et la noix de commande associée à la fourchette du rapport de marche avant le plus élevé.

D'autres buts, caractéristiques et avantages de l'invention apparaîtront au cours de la description suivante de plusieurs modes de réalisation, donnés à titre d'exemples non limitatifs, en regard des dessins joints.

Sur les dessins :
- la figure 1 est une vue en perspective d'un système de commande de changement de rapport selon l'invention, dans son environnement comprenant un bras de commande, des tringles, des fourchettes et un basculeur de marche arrière ;
- la figure 2 est une vue détaillée montrant en perspective et en coupe partielle le dessus d'un système de désengagement du rapport le plus élevé de la boîte de vitesses et une partie du système de commande de la figure 1 ;
- la figure 3 est une vue montrant en perspective le dessus d'une partie du système de désengagement du rapport le plus élevé de la boîte de vitesses, au point mort des rapports de la boîte de vitesses ;
- la figure 4 est une vue du type des figures 2 et 3, sans coupe partielle, montrant le système à la sélection du cinquième rapport de marche avant ou de la marche arrière ;
- la figure 5 est une vue du type de la figure 3, montrant le système lorsque la marche arrière est engagée ;
- la figure 6 est une vue du type de la figure 4, montrant le système lorsque le cinquième rapport de marche avant est engagé, avec une partie du système en transparence ;
- la figure 7 est une vue du type de la figure 4, montrant le système au désengagement du cinquième rapport de marche avant ;
- la figure 8 est une vue du type de la figure 2, montrant le système au désengagement du cinquième rapport de marche avant, comme la figure 7 ;
- les figures 9 et 11 sont des vues en perspective montrant le dessous d'une première variante d'un système de commande de changement de rapport selon l'invention ;
- la figure 10 est une vue en perspective montrant le dessus de la première variante du système de commande de changement de rapport selon l'invention ;
- la figure 12 est une vue schématique de dessus montrant une partie de la première variante du système au point mort ;
- les figures 13, 15 et 15 sont des vues du type de la figure 12, respectivement quand la marche arrière est engagée, quand le cinquième rapport de marche avant est engagé et au désengagement du cinquième rapport ;
- la figure 16 est une vue en perspective montrant le dessus d'une deuxième variante du système de commande de changement de rapport selon l'invention, dans son environnement comprenant un bras de commande, des tringles, des fourchettes et un basculeur de marche arrière ;
- la figure 17 est une vue en perspective montrant le dessous de la deuxième variante du système de commande de changement de rapport selon l'invention, dans son environnement comprenant un bras de commande, des tringles et un basculeur de marche arrière ;
- la figure 18 est une vue en perspective montrant, pour ladite deuxième variante, le dessus d'une partie du système de désengagement du rapport le plus élevé de la boîte de vitesses.

Sur les différentes figures, les mêmes références désignent des éléments identiques ou similaires.

Dans la description qui va suivre, un repère est indiqué pour faciliter la lecture. La direction désignée X sur le repère est dite longitudinale, la direction désignée Y est dite transversale, la direction désignée Z est dite verticale. Dans le véhicule, les composants de la boîte de vitesses peuvent être orientés différemment de l'orientation indiquée sur les figures.

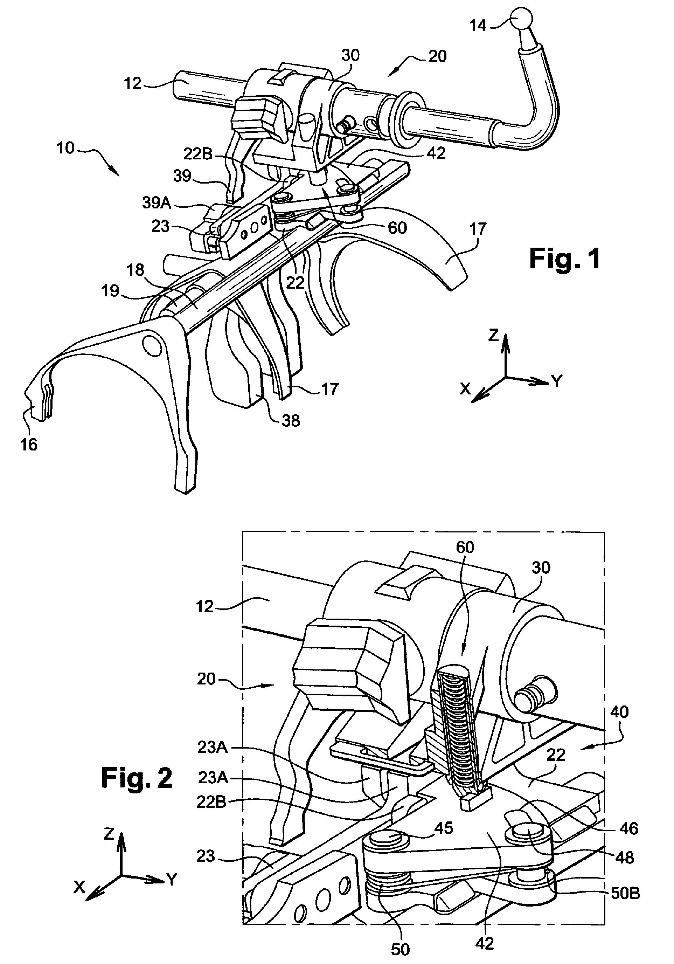

A la figure 1 sont illustrées les pièces principales constituant un système de commande 10 de changement de rapports d'une boîte de vitesses à cinq rapports de marche avant et un rapport de marche arrière. Le système de commande 10 est opérant pour une boîte de vitesses manuelle dont un levier de changement de vitesses situé dans l'habitacle du véhicule est guidé selon une grille de débattement ayant un emplacement de rapport de marche arrière en face de l'emplacement du cinquième rapport de marche avant, le levier de changement de vitesse étant dans des positions adjacentes quand la marche arrière ou le quatrième rapport de marche avant sont engagés.

Parmi ces pièces principales, en entrée du système de commande 10, un bras de commande 12 est commandé par le conducteur par l'intermédiaire du levier de changement de vitesses qui est situé dans l'habitacle et qui actionne des câbles dont l'un, non représenté, est fixé à l'extrémité libre 14 du bras de commande 12.

Parmi ces pièces principales, en sortie du système de commande 10, des fourchettes 16, 17 sont supportées par des tringles 18, 19 pour faire translater des éléments de synchroniseur permettant d'accoupler en rotation des pignons fou de la boîte de vitesses à leur arbre ou de les découpler.

Entre le bras de commande 12 et les fourchettes 16, 17, le système de commande 10 de changement de rapports comporte un dispositif d'interverrouillage 20 commandé directement par le bras 12. Il comporte aussi des noix de commande 22, 23 qui sont commandées directement par le dispositif d'interverrouillage 20 pour commander les fourchettes 16, 17.

Les noix de commande 22, 23 sont soit solidaires de leur fourchette 16, 17 quand cette dernière est montée coulissante sur sa tringle, soit solidaires de leur tringle 18, 19 sur laquelle est montée fixement la fourchette 16, 17 correspondante. Ce dernier cas est celui de la noix référencée 22 sur les figures, cette noix 22 étant fixée à la tringle 18 sur laquelle est fixée la fourchette 16 qui est utilisée pour engager et dégager le cinquième rapport de la boîte de vitesses. Les noix de commande référencées 23 sur les figures servent pour les rapports 1 à 4 de la boîte de vitesses et elles permettent d'actionner les fourchettes référencées 17 sur les figures. La noix 23 directement adjacente à la noix 22 sert pour la commande des rapports 3 et 4 de la boîte de vitesses.

Chaque noix de commande 22, 23 comporte un étrier déterminant un logement interne entre une âme sensiblement horizontale et deux branches s'étendant sensiblement verticalement dans un plan longitudinal.

Les branches verticales 23A des étriers des noix de commande 23 déterminent un logement interne ayant une première longueur. Les branches 23A sont alignées au point mort de la boîte de vitesses et sont décalées dans la direction X quand l'un des rapports 1 à 4 est engagé.

Les branches verticales 22A et 22B de l'étrier de la noix de commande 22 déterminent un logement interne ayant une deuxième longueur supérieure à la première longueur. La branche référencée 22A sur les figures sert pour l'engagement du cinquième rapport de la boîte de vitesses. La branche référencée 22B sur les figures sert pour dégager le cinquième rapport et pour sécuriser le passage du cinquième rapport vers le quatrième rapport en étant en relation avec une noix de désengagement 42 comme il sera expliqué plus en détail ultérieurement.

Le dispositif d'interverrouillage 20 sert à commander les noix 22, 23 par action sur les branches 22A, 22B, 23A des étriers.

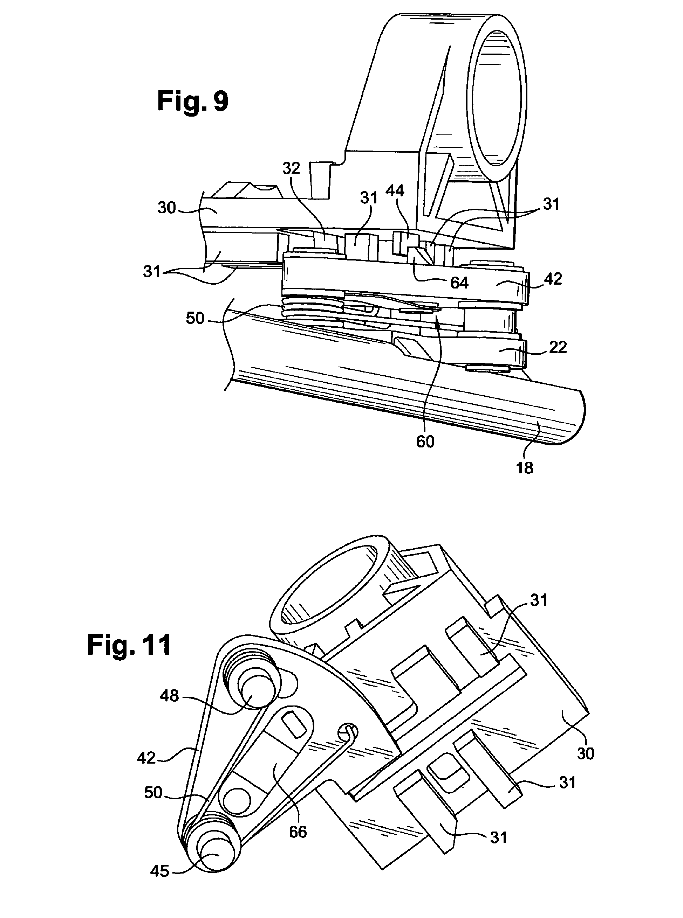

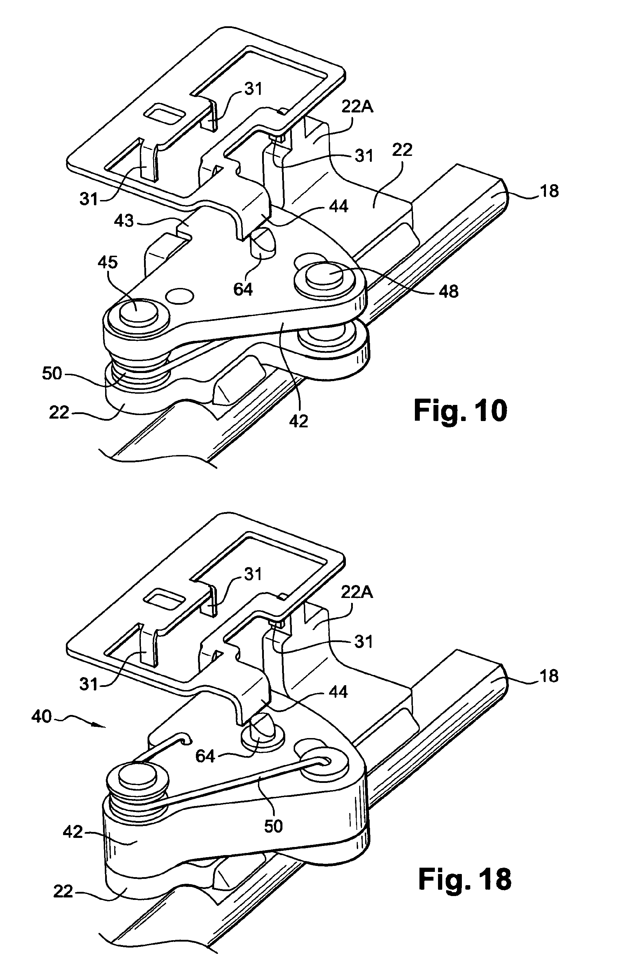

Le dispositif d'interverrouillage 20 comporte une clé d'interverrouillage 30 dont un corps est assemblé avec le bras de commande 12 en pouvant se déplacer transversalement avec le bras 12 et en pouvant tourner par rapport au bras 12, ledit corps ne pouvant pas tourner avec le bras 12 car il est maintenu par le carter de la boîte de vitesses. Le corps de la clé d'interverrouillage 30 comporte, à sa partie inférieure, des bossages 31 (figures 9, 10, 11 et 17 par exemple) déterminant des rainures de forme complémentaire à la forme de nervures aménagées à l'extrémité libre des branches 22A, 22B, 23A des étriers pour sélectivement bloquer ces derniers ou autoriser leur translation en fonction du rapport de la boîte de vitesses à commander.

Le dispositif d'interverrouillage 20 comporte aussi un doigt de commande de passage de vitesse 32 qui sert à l'engagement et au dégagement de rapports en déplaçant les noix 22, 23. Le doigt 32 de commande comporte une extrémité supérieure fixée au bras de commande 12 pour pouvoir tourner et se translater avec ledit bras, le doigt 32 tournant dans le corps de la clé d'interverrouillage 30. A son extrémité inférieure, le doigt 32 comporte une tête 34 qui peut pivoter et se translater dans les logements des étriers pour les actionner sélectivement en fonction du rapport de la boîte de vitesses à commander.

Le système de commande 10 comporte aussi un basculeur 38 de marche arrière pour engrener des pignons de marche arrière. Le basculeur 38 est commandé par un levier basculeur 39 en forme de fourche qui est solidaire du doigt 32. Le levier basculeur 39 actionne aussi au passage de la marche arrière un loquet 39A de freinage d'arbre de boîte de vitesses.

Le système de commande 10 comporte en outre un système de désengagement 40 du rapport le plus élevé de la boîte de vitesses, en l'espèce le cinquième rapport.

Le système de désengagement 40 comporte une noix de désengagement 42 montée à pivotement sur la noix de commande 22. La noix de désengagement 42 est utilisée d'une part pour engager et dégager le cinquième rapport de la boîte de vitesses et d'autre part pour sécuriser le passage du cinquième rapport vers le quatrième rapport en évitant un passage intempestif de la marche arrière.

La noix de désengagement 42 est constituée principalement par une plaque globalement en forme de portion de disque d'environ trente degrés. La noix de désengagement 42 comporte, en saillie de l'un des côtés de la portion de disque, une aile de blocage 43 dont la largeur correspond sensiblement à l'épaisseur de la noix 22. La longueur de l'aile 43 sur ledit côté, additionnée à la longueur de la tête 34 du doigt 32, correspond à la longueur de l'étrier de la noix 22.

La noix de désengagement 42 comporte, en saillie au dessus de la plaque, une nervure de commande 44 qui est rectiligne dans la direction longitudinale, parallèlement aux noix de commande 22, 23. La nervure de commande 44 est à proximité du côté courbe de la noix de désengagement 42, mi longueur de ce côté.

La plaque constituant la noix de désengagement 42 délimite deux perçages qui servent pour son guidage à pivotement par rapport à la noix de commande 22 associée à la fourchette 16 du rapport de marche avant le plus élevé.

Un premier des deux perçages est cylindrique, est disposé à une extrémité de la plaque proche du centre de la portion de disque formant la noix de désengagement 42 et reçoit un axe de pivot 45.

Un deuxième des deux perçages, appelé perçage de guidage 46, est de forme arquée concentriquement à l'axe de pivot 45 et est disposé à une moitié de la plaque opposée à la moitié de la plaque comportant l'aile 43. Un axe de guidage 48 est engagé à coulissement dans le perçage de guidage 46.

L'axe de pivot 45 et l'axe de guidage 48 permettent de maintenir la plaque constituant la noix de désengagement 42 sur la noix de commande 22, parallèlement à l'âme horizontale de la noix de commande 22.

La plaque constituant la noix de désengagement 42 est montée sur la noix de commande 22 en étant orientée de manière que l'aile de blocage 43 soit orientée en direction de l'étrier de ladite noix 22, l'axe de pivot 45 étant à proximité de la branche 22B dudit étrier.

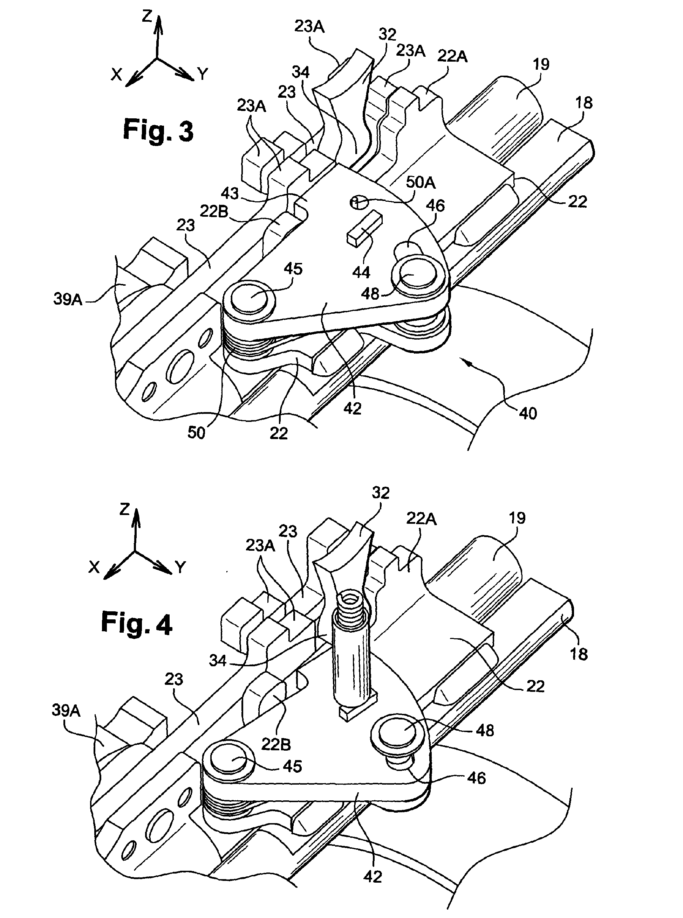

La plaque constituant la noix de désengagement 42 peut pivoter par rapport à la noix de commande 22 sur laquelle elle est montée en étant rappelée élastiquement par un ressort 50 de type ressort de torsion cylindrique à spires ayant une patte d'extrémité 50A ancrée dans la plaque constituant la noix de désengagement 42 (figure 3 et 11) et une patte d'extrémité 50B en appui sur l'axe de guidage 48 (figure 2 et 11). Dans les modes de réalisation représentés aux figures 1 à 12, les spires du ressort 50 sont montées en entourant l'axe de pivot 45, entre la noix de commande 22 et la plaque constituant la noix de désengagement 42.

Le ressort 50 tend à rappeler la plaque vers une position de repos dans laquelle la noix de désengagement 42 est en appui sur la branche 22B. Dans cette position de repos, l'aile de blocage 43 est engagée dans l'étrier de la noix de commande 22 associée à la fourchette de commande du cinquième rapport, en regard de la branche 23A servant à l'engagement du quatrième rapport de la boîte de vitesse et au désengagement du troisième rapport de ladite boîte, la plaque étant poussée par le ressort 50 vers les noix de commande 22, 23.

Le système de désengagement 40 comporte, associé dans son fonctionnement à la nervure de commande 44 aménagée sur la noix de désengagement 42, un doigt escamotable 60 monté solidaire de la clé d'interverrouillage 30, de façon que le doigt escamotable 60 et la clé d'interverrouillage 30 puissent coulisser ensemble selon la direction transversale Y.

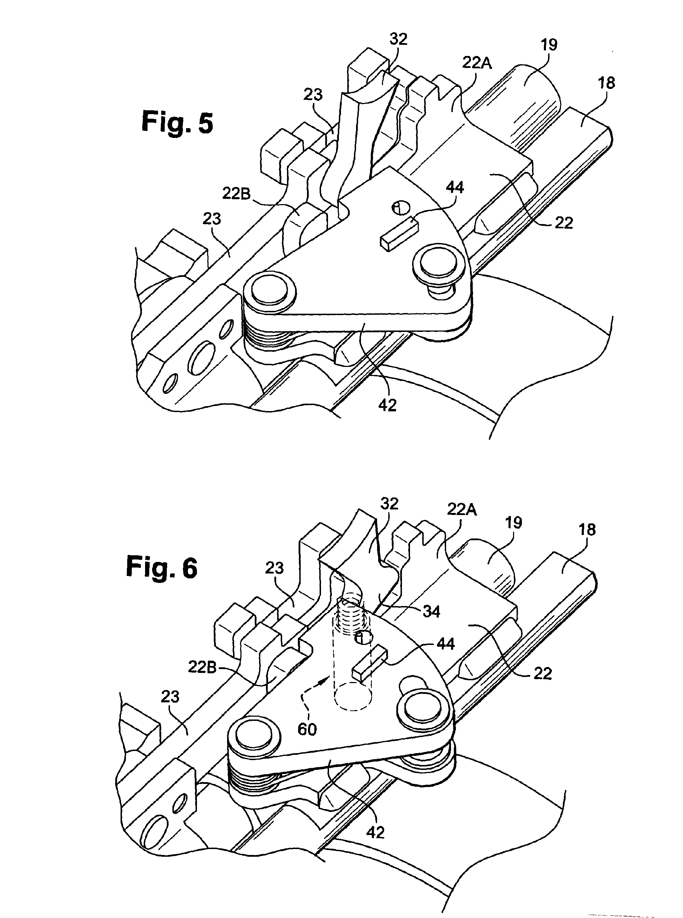

Comme représenté aux figures 2 et 6 par exemple, le doigt escamotable 60 comporte un fourreau 62 qui est solidaire du corps de la clé d'interverrouillage 30 et qui contient un coulisseau escamotable 64 pourvu d'une terminaison 66 en demi-cône. Un ressort de poussée 68, interposé entre le fond du fourreau 62 et le fond du coulisseau 64 dans la terminaison 66, de façon à pousser le coulisseau vers la noix de désengagement.

Le doigt escamotable 60 est monté sur la clé d'interverrouillage 30 de manière que d'une part la partie inclinée du demi-cône formant la terminaison 66 est tournée vers l'aile 43 et que d'autre part l'épaulement dudit demi-cône est tourné à l'opposé, vers l'axe de guidage 48.

Le fonctionnement du système de commande de changement de rapport 10 ressort déjà en partie de la description qui précède et va maintenant être détaillé.

Quand la boîte de vitesses est au point mort, les noix 22, 23, le doigt de passage de vitesses 32 et le système de désengagement 40 sont dans la position de repos représentée aux figures 1 à 5. Les branches 23A des étriers 23 sont alignées. L'étrier de la noix 23 servant pour le troisième rapport et le quatrième rapport de la boîte de vitesses, en l'espèce la noix 23 adjacente à la noix 22, reçoit la tête 34 du doigt 32, la tête n'appuyant pas sur les branches 23A. La branche 22A servant pour l'engagement du cinquième rapport est alignée avec les branches 23A adjacentes, la plaque constituant la noix de désengagement 42 étant à sa position de repos décrite ci-dessus. La nervure de commande 44 est en regard de l'épaulement de la terminaison 66, cette dernière étant située du côté de ladite nervure tourné vers l'aile 43.

Pour commencer à passer le cinquième rapport ou le rapport de marche arrière à partir du point mort, ces deux rapports étant en face l'un de l'autre sur la grille du levier de vitesses situé dans l'habitacle, le conducteur du véhicule actionne tout d'abord le levier de changement de vitesses selon un mouvement de sélection qui entraîne la translation du bras 12, ce qui translate simultanément la clé d'interverrouillage 30 et le doigt 32 selon l'axe Y dans la position de sélection de cinquième rapport et de marche arrière représentée à la figure 4. La tête 34 du doigt 32 vient dans l'étrier de la noix 22 et l'épaulement de la terminaison 66 pousse la nervure de commande 44 de la plaque constituant la noix de désengagement 42, à l'encontre de la force du ressort de rappel 50. L'aile de blocage 43 est alors hors de l'étrier de la noix 22, la plaque étant dans une position transversalement décalée dite de sélection. Le perçage de guidage 46 est décalé par rapport à l'axe de guidage 48.

Pour finir de passer le rapport de marche arrière, le conducteur du véhicule pivote ensuite le levier de vitesses selon un mouvement d'engagement qui entraîne le pivotement du bras 12, ce qui pivote le levier basculeur 39 engrenant les pignons de marche arrière via le basculeur 38 et actionne le loquet 39A. Le pivotement du bras 12 fait aussi pivoter le doigt 32 dont la tête 34 vient en position dite de marche arrière en se déplaçant dans l'étrier de la noix 22, comme représenté à la figure 5. La noix 22 ne se déplace pas car la tête 34 est éloignée de la branche 22B et ne l'actionne donc pas. La tête 34 glisse le long de la face d'extrémité libre de l'aile 43, entre cette dernière et la branche 23A adjacente, la plaque 42 ne coulissant pas et restant dans sa position transversalement décalée. L'appui mutuel de l'épaulement de la terminaison 66 et la nervure de commande 44 est conservé, la terminaison 66 restant située du côté de ladite nervure 44 tourné vers l'aile 43.

Lors du dégagement de la marche arrière, les mouvements de la clé d'interverrouillage 30 et de la clé 32 sont inversés et la boîte de vitesses revient au point mort. L'appui mutuel de l'épaulement de la terminaison 66 et la nervure de commande 44 est encore conservé, la terminaison 66 restant encore située du côté de ladite nervure tourné vers l'aile 43. La plaque constituant la noix de désengagement 42 revient à sa position de repos sous l'action de ressort de rappel 50 quand le doigt escamotable 60 solidaire de la clé d'interverrouillage 30 revient au point mort et le doigt 32 revient dans l'étrier de la noix 23 adjacente à la noix 22.

Pour finir de passer le cinquième rapport, après la sélection de rapport telle que décrite ci-dessus en relation avec la figure 4, le conducteur du véhicule actionne le levier de vitesses selon un mouvement d'engagement qui pivote le bras 12 et pivote le doigt 32, entraînant le décalage de la tête 34 longitudinalement dans le plan de la noix 22. Lors de son décalage, la tête 34 appuie sur la branche 22A et déplace la noix 22 selon l'axe X dans sa position de cinquième rapport engagé, telle que représentée à la figure 6.

Le déplacement longitudinal de la noix 22 lors de l'engagement du cinquième rapport de la boîte de vitesses, entraîne un décalage longitudinal de la nervure de commande 44 par rapport au coulisseau 64 du doigt escamotable 60 qui est tracé en traits pointillés à la figure 6, si bien que la terminaison 66 du coulisseau 64 n'est plus longitudinalement en regard de la nervure de commande 44 à l'engagement du cinquième rapport. Ainsi, la terminaison 66 ne pousse plus la nervure de commande 44 à l'encontre de la force de rappel du ressort 50, ce qui fait que sous l'action du ressort 50, la plaque peut pivoter en revenant en position de repos, avec appui en butée de rotation contre la branche 22B. Ce retour est rendu possible car simultanément au décalage mutuel de la nervure de commande 44 et du coulisseau 64, comme la tête 34 se décale longitudinalement par rapport à l'aile de blocage 43, au-delà de cette dernière, l'étrier de la noix 22 détermine un espace libre en regard de l'aile 43. L'aile 43 vient donc se positionner dans l'étrier de la noix 22 en étant calée entre la tête 34 et la branche 22B.

Pour changer de rapport en rétrogradant du cinquième rapport au quatrième rapport, sans risquer de passer accidentellement en marche arrière, il faut désengager le cinquième rapport pour revenir au point mort, puis engager le quatrième rapport.

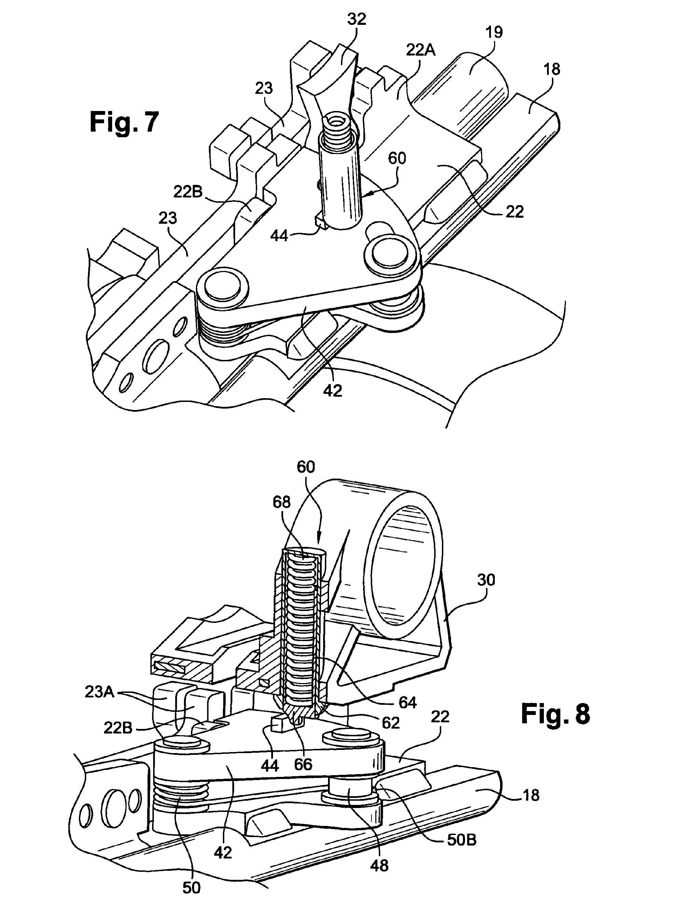

A début du désengagement du cinquième rapport, comme représenté à la figure 7, la tête 34 du doigt 32 et l'aile 43 de la noix de désengagement 42 sont calés dans l'étrier de la noix 22 et font coulisser cette dernière sur une course déterminée par exemple par l'arrêt d'un ergot supérieur (visible sur les figures 3 à 7) de la branche 22A, la plaque au repos étant alors dans une position de désengagement du cinquième rapport, avec appui sur la branche 22B. Compte tenu du blocage de la tête 34 entre l'aile de blocage 43 et la branche 22A de l'étrier, la tête 34 ne peut pas aller dans sa position de marche arrière, tout en permettant l'action voulue de dégagement de rapport pour actionner la fourchette 16. Du fait du coulissement de la noix 22, la terminaison 66 du doigt escamotable 60 et la nervure de commande 44 sont à nouveau mutuellement en regard selon la direction transversale Y. Ladite terminaison 66 est située du côté de la nervure 44 tourné à l'opposé de l'aile 43, la partie inclinée en demi-cône de ladite terminaison 66 étant tournée vers la nervure de commande 44.

A la fin du désengagement du cinquième rapport, sous l'action du bras de commande 12, la tête 34 du doigt 32, qui se déplace selon la direction transversale Y, revient au point mort dans l'étrier de la noix 23 adjacente à la noix 22 pour être décalée avec cette dernière à l'engagement du quatrième rapport de la boîte de vitesses, sans risque d'engagement de la marche arrière. Lors de ce retour au point mort, la terminaison 66 du doigt escamotable 60 passe par-dessus la nervure de commande 44 pour revenir du côté de cette dernière tourné vers l'aile 43 quand le cinquième rapport est complètement désengagé. La partie inclinée en demi-cône de ladite terminaison 66 permet de faciliter le passage du coulisseau 64 à une position rétractée dans le fourreau 62 afin faciliter le passage de la terminaison 66 au dessus de la nervure 44. Le ressort de poussée 68 permet un retour de la terminaison 66 déployée hors du fourreau 62 quand le cinquième rapport est complètement désengagé, la terminaison 66 étant alors située du côté de ladite nervure tourné vers l'aile 43.

Avantageusement, l'aile de blocage 43 aménagée sur la noix de désengagement 42 permet l'actionnement de la noix correspondante 22 pour dégager le cinquième rapport, tout comme la sécurisation du retour au point mort, sans risque d'activer la marche arrière. De plus, le doigt escamotable 60 en appui avec la nervure de commande 44 empêche tout pivotement accidentel de la noix de désengagement 42 lors du retour au point mort après désengagement du cinquième rapport de marche avant.

Avantageusement, le système de commande selon l'invention permet d'éviter d'utiliser une grille de sélection de rapports ayant un décalage d'une demi-sélection du couloir de marche arrière par rapport au couloir de cinquième rapport.

Dans la première variante de réalisation représentée aux figures 9 à 15, le système de désengagement 40 est inversé par rapport au mode de réalisation ci-avant décrit. Ici, le doigt escamotable 60 est solidaire de la noix de désengagement 42 et la nervure de commande 44 est solidaire de la clé d'interverrouillage 30.

Dans cette variante de réalisation, le doigt escamotable 60 comporte un coulisseau 64 directement coulissant dans un perçage aménagé dans la plaque formant la noix de désengagement 42. Le coulisseau 64 est un cylindre dont l'extrémité supérieure est biseautée à son côté tourné à l'opposé aux noix 22, 23. L'extrémité inférieure du coulisseau 64 est solidaire d'une lame de ressort 66 qui est montée fixement sur l'axe de pivot 45 sous la noix de désengagement 42 et qui tend à pousser ledit coulisseau 64 vers le haut, en direction de la clé d'interverrouillage 30. La butée en rotation de la noix de désengagement 42, à l'engagement du cinquième rapport, se fait par butée de l'axe 48 dans le perçage de guidage 46.

Aux figures 9 à 12, le système de désengagement 40 est représenté alors que la boîte de vitesse est au point mort.

De manière générale, lors de divers mouvements de la clé d'interverrouillage 30, la nervure de commande 44 et le coulisseau 64 se déplacent selon la direction transversale et lors de divers mouvements de la tête 34 du doigt de commande 32 entraînant la noix de commande 22, la noix de désengagement 42 se déplace selon la direction longitudinale.

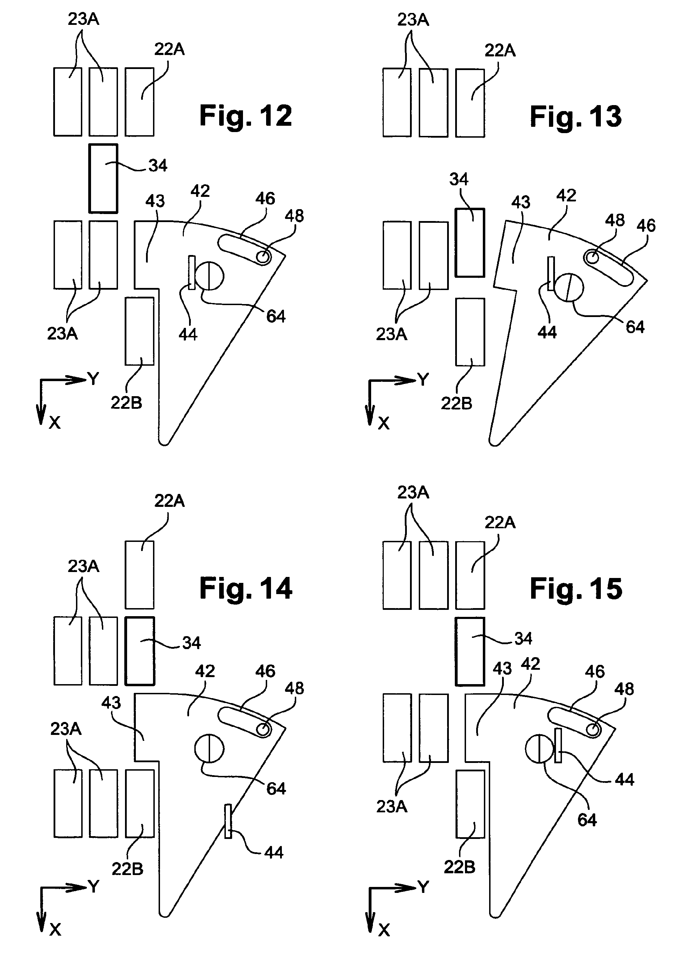

Lors du passage du point mort (figure 12) à la sélection de marche arrière ou de cinquième rapport de marche avant, la clé d'interverrouillage 30 se décale de manière que la tête 34 soit en regard de la noix de commande 22, la nervure 44 solidaire de ladite clé 30 pousse le coulisseau 64, ce qui fait pivoter la noix de désengagement 42 et dégage de l'espace dans la noix de commande 22.

Après, cette sélection de marche arrière ou de cinquième rapport, lors de l'engagement de la marche arrière (figure 13), l'espace disponible dans la noix de commande 22 est mis à profit pour le libre débattement de la tête 34 selon la direction longitudinale vers la branche 22B.

Après, cette sélection de marche arrière ou de cinquième rapport, à l'engagement du cinquième rapport, la tête 34 se débat selon la direction longitudinale vers la branche 22A qu'elle pousse en déplaçant la noix de commande 22 solidaire de la noix de désengagement 42 dont le coulisseau 64 se décale par rapport à la nervure de commande 44. Ce décalage permet, sous l'action du ressort 50, le pivotement de retour de la noix de désengagement 42 à sa position de repos dans laquelle l'aile 43 est en regard de la noix de commande 22. La tête 34 est calée entre la branche 22A et l'aile 43, comme représenté à la figure 14 montrant le système lorsque le cinquième rapport est engagé.

Lors du début du désengagement du cinquième rapport de marche avant, la tête 34 se déplace jusqu'à être dans le couloir de point mort, en regard des étriers des noix de commande 23 (figure 15). La tête 34 pousse selon la direction longitudinale la noix de désengagement 42 qui se translate avec la noix de commande 22, le coulisseau 64 revenant en regard de la nervure de commande 44. Le coulisseau 64 est alors situé, par rapport à la nervure de commande 44, du côté des noix 22, 23.

Comme dans le mode de réalisation précédent, l'aile 43 située au droit de la noix de commande 22, alignée avec la branche 22A, bloque le passage accidentel de la marche arrière en interdisant le libre débattement de la tête 34 en direction de la branche 22B. L'aile 43 préserve avantageusement d'un passage erroné de la marche arrière lors du changement de rapport cinquième à quatrième, le doigt escamotable 60 en appui avec la nervure de commande 44 empêchant en outre tout pivotement accidentel de la noix de désengagement 42 lors du retour au point mort après désengagement du cinquième rapport de marche avant.

A la fin du désengagement du cinquième rapport de marche avant, le retour au point mort de la clé d'interverrouillage 30 par translation selon la direction transversale fait appuyer la nervure de commande 44 sur la partie biseautée du coulisseau 64 qui s'efface dans la noix de désengagement 42. Ainsi, le coulisseau 64 repasse de l'autre côté de la nervure de commande 44, et peut à nouveau être actif lors d'une sélection suivante de marche arrière ou de cinquième rapport.

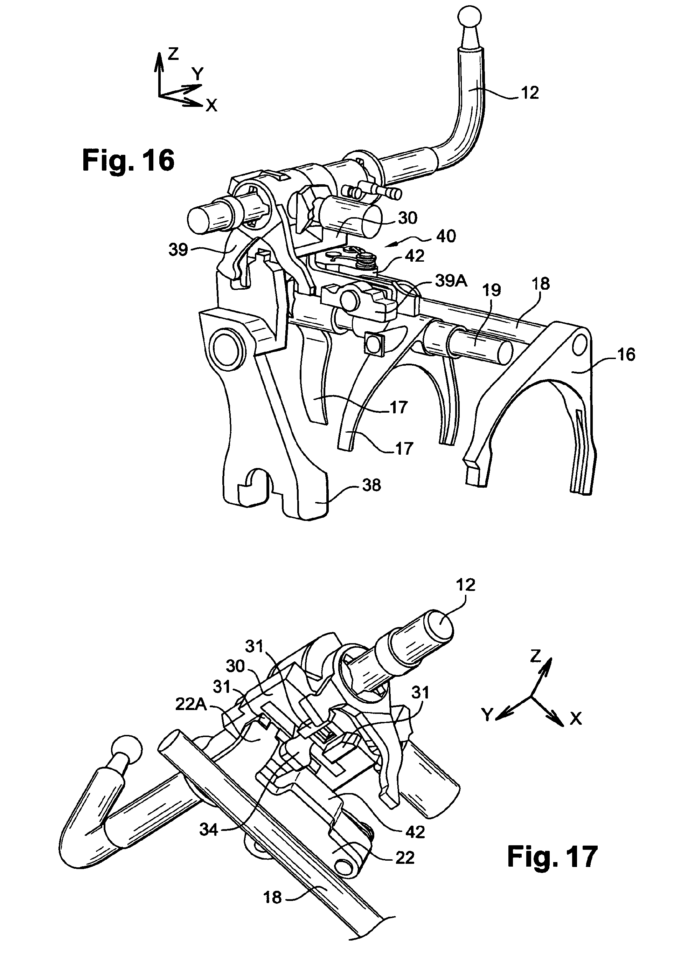

Dans la deuxième variante de réalisation représentée aux figures 16 à 18, le ressort n'est pas entre la noix de commande 22 et la noix de désengagement 42, mais il est monté au dessus de cette dernière.

En outre, la noix de commande 22 comporte une unique branche 22A utilisée à l'engagement du cinquième rapport de marche avant, l'aile 43 poussée directement par la tête 34 étant utilisée au désengagement du cinquième rapport pour déplacer la noix de désengagement 42 et la noix de commande 22. La butée en rotation de la noix de désengagement 42 est effectuée via l'axe 48 dans le perçage de guidage 46.

Le fonctionnement de cette deuxième variante est sur le même principe que le fonctionnement de la première variante.

## Revendications

1. Système de commande pour une boîte de vitesses de véhicule, comprenant des fourchettes (16, 17) associées à des engrenages de rapports de marche avant, des noix de commande (22, 23) comportant au moins une branche (22a, 22B, 23A), associées aux fourchettes (16, 17) et un dispositif d'interverrouillage (20) pouvant sélectivement actionner l'une desdites noix par action sur sa branche pour déplacer l'une des fourchettes et verrouiller les autres noix au point mort, ledit dispositif d'interverrouillage (20) comprenant d'une part un doigt de commande (32, 34) pouvant actionner une branche (22A, 22B, 23A) de la noix (22, 23) associée à la fourchette (16, 17) à commander, et d'autre part une clé d'interverrouillage (30),
**caractérisé en ce que** le doigt de commande (32, 34) se débat dans la clé d'interverrouillage et peut sélectivement verrouiller au moins l'une des noix devant rester au point mort et autoriser le déplacement de la noix associée à la fourchette à commander,
et **en ce que** ledit système comporte en outre :
- un système de désengagement (40) du rapport de marche avant le plus élevé comprend une noix de désengagement (42), qui peut occuper d'une part une position de sélection par actionnement de la clé d'interverrouillage (30) et d'autre part une position de désengagement ;
- à sa position de sélection, la noix de désengagement (42) autorise tant l'engagement du rapport de marche avant le plus élevé par déplacement du doigt de commande actionnant la branche (22A) de la noix (22) associée à la fourchette (16, 17) du rapport de marche avant le plus élevé que la commande du rapport de marche arrière avec libre débattement du doigt de commande (32, 34) à l'opposé de ladite branche (22A) ;
- à sa position de désengagement, lors du désengagement du rapport de marche avant le plus élevé, la noix de désengagement (42) interdit ledit libre débattement du doigt de commande (32, 34) afin d'interdire la commande du rapport de marche arrière et actionne la noix de commande (22) associée à la fourchette (16) du rapport de marche avant le plus élevé.

2. Système selon la revendication 1, **caractérisé en ce que** le système de désengagement (40) comporte, à l'interface entre la clé d'interverrouillage (30) et la noix de désengagement (42), un doigt escamotable (60) permettant d'une part un mouvement coordonné de la clé d'interverrouillage (30) et de la noix de désengagement (42) pour amener la noix de désengagement (42) à sa position de sélection et d'autre part un mouvement autonome de la noix de désengagement (42) pour son passage de sa position de sélection à sa position de désengagement.

3. Système selon la revendication 2, **caractérisé en ce que** le doigt escamotable (60) est solidaire de l'une parmi la clé d'interverrouillage (30) et la noix de désengagement (42), une nervure de commande (44) est solidaire de l'autre parmi la clé d'interverrouillage (30) et la noix de désengagement (42) et le doigt escamotable (60) est en appui sur la nervure de commande (44) pour amener la noix de désengagement (42) à sa position de sélection.

4. Système selon l'une quelconque des revendications 1 à 3, **caractérisé en ce que** la clé d'interverrouillage (30) amène la noix de désengagement (42) à sa position de sélection en l'actionnant perpendiculairement à la noix de commande (22) associée à la fourchette (16) du rapport de marche avant le plus élevé.

5. Système selon la revendication 3, **caractérisé en ce que** le doigt escamotable (60) est dégagé de la nervure de commande (44) afin de permettre le mouvement autonome de la noix de désengagement (42) lors du désengagement du rapport de marche avant le plus élevé.

6. Système selon l'une quelconque des revendications 1 à 5, **caractérisé en ce que** le doigt de commande (32, 34) actionne la noix de désengagement (42) dans une direction parallèle à la noix de commande (22) associée à la fourchette (16) du rapport de marche avant le plus élevé pour actionner ladite noix de commande (22) lors du désengagement de ce rapport.

7. Système selon l'une quelconque des revendications 1 à 6, **caractérisé en ce que** la noix de désengagement (42) est montée sur la noix de commande (22) associée à la fourchette (16) du rapport de marche avant le plus élevé, la noix de désengagement (42) étant guidée à pivotement sur ladite noix de commande (22).

8. Système selon l'une quelconque des revendications précédentes, **caractérisé en ce qu'**un dispositif de rappel (50) tend à ramener la noix de désengagement (42) à sa position de désengagement.

9. Système selon la revendication 8, **caractérisé en ce que** le dispositif de rappel (50) est un ressort interposé entre la noix de désengagement (42) et la noix de commande (22) associée à la fourchette (16) du rapport de marche avant le plus élevé.

## Claims

1. Control system for a vehicle gearbox, comprising forks (16, 17) associated with gearwheels of forward gear ratios, control arms (22, 23) comprising at least a branch (22A, 22B, 23A) and associated with the forks (16, 17), and an interlocking device (20) capable of selectively actuating one of said arms by acting on the branch thereof so as to displace one of the forks and lock the other arms in the neutral position, said interlocking device (20) comprising on the one hand a control finger (32, 34) capable of actuating a branch (22A, 22B, 23A) of the arm (22, 23) associated with the fork (16, 17) to be controlled, and on the other hand an interlocking key (30), **characterised in that** the control finger (32, 34) travels into the interlocking key and can selectively lock at least one of the arms which must stay in the neutral position and allow the displacement of the arm associated with the fork to be controlled, and **in that** said system further comprises:
- a system (40) for disengagement of the highest forward gear ratio comprises a disengagement plate (42) which can occupy on the one hand a selection position by actuation of the interlocking key (30) and on the other hand a disengagement position;
- in the selection position thereof, the disengagement plate (42) allows engagement of the highest forward gear ratio by displacement of the control finger actuating the branch (22A) of the arm (22) associated with the fork (16, 17) of the highest forward gear ratio, and control of the reverse gear ratio with free travel of the control finger (32, 34) away from said branch (22A);
- in the disengagement position thereof, upon disengagement of the highest forward gear ratio, the disengagement plate (42) prevents said free travel of the control finger (32, 34) in order to prevent control of the reverse gear ratio and actuates the control arm (22) associated with the fork (16) of the highest forward gear ratio.

2. System according to claim 1, **characterised in that** the disengagement system (40) comprises, at the interface between the interlocking key (30) and the disengagement plate (42), a retractable finger (60) allowing on the one hand coordinated movement of the interlocking key (30) and the disengagement plate (42) so as to bring the disengagement plate (42) into its selection position, and on the other hand autonomous movement of the disengagement plate (42) for the passage thereof from its selection position into its disengagement position.

3. System according to claim 2, **characterised in that** the retractable finger (60) is connected to one of the interlocking key (30) and the disengagement plate (42), a control rib (44) is connected to the other of the interlocking key (30) and the disengagement plate (42), and the retractable finger (60) rests on the control rib (44) so as to bring the disengagement plate (42) into its selection position.

4. System according to any one of claims 1 to 3, **characterised in that** the interlocking key (30) brings the disengagement plate (42) into its selection position by actuating it at right angles to the control arm (22) associated with the fork (16) of the highest forward gear ratio.

5. System according to claim 3, **characterised in that** the retractable finger (60) is disengaged from the control rib (44) in order to allow the autonomous movement of the disengagement plate (42) upon the disengagement of the highest forward gear ratio.

6. System according to any one of claims 1 to 5, **characterised in that** the control finger (32, 34) actuates the disengagement plate (42) in a direction parallel to the control arm (22) associated with the fork (16) of the highest forward gear ratio so as to actuate said control arm (22) upon disengagement of this ratio.

7. System according to any one of claims 1 to 6, **characterised in that** the disengagement plate (42) is mounted on the control arm (22) associated with the fork (16) of the highest forward gear ratio, the disengagement plate (42) being pivotally guided on said control arm (22).

8. System according to any one of the preceding claims, **characterised in that** a return device (50) is biased to bring the disengagement plate (42) into its disengagement position.

9. System according to claim 8, **characterised in that** the return device (50) is a spring interposed between the disengagement plate (42) and the control arm (22) associated with the fork (16) of the highest forward gear ratio.

## Patentansprüche

1. Steuersystem für ein Fahrzeuggetriebe, umfassend Gabeln (16, 17), die Zahnrädern der Vorwärtsgänge zugehörig sind, Steuerelemente (22, 23), die mindestens einen Arm (22A, 22B, 23A) aufweisen und den Gabeln (16, 17) zugehörig sind, und eine Sperrvorrichtung (20), die gezielt eins der Elemente durch Einwirken auf seinen Arm betätigen kann, um eine der Gabeln zu verlagern, und die anderen Elemente in der Leerlaufstellung sperren kann, wobei die Sperrvorrichtung (20) einerseits einen Steuerfinger (32, 34) umfasst, der einen Arm (22A, 22B, 23A) des Elements (22, 23), das der zu steuernden Gabel (16, 17) zugehörig ist, betätigen kann, und andererseits einen Sperrschlüssel (30),
**dadurch gekennzeichnet, dass** sich der Steuerfinger (32, 34) in dem Sperrschlüssel bewegt und gezielt mindestens eins der Elemente sperren kann, das in der Leerlaufstellung bleiben soll, und die Bewegung des Elements zulassen kann, das der zu steuernden Gabel zugehörig ist,
und **dadurch**, dass das System ferner Folgendes aufweist:
- ein Herausnahmesystem (40) für den höchsten Vorwärtsgang umfasst eine Herausnahmescheibe (42), die einerseits eine Wählstellung durch Betätigen des Sperrschlüssels (30) und andererseits eine Herausnahmestellung einnehmen kann,
- wobei die Herausnahmescheibe (42) in ihrer Wählstellung sowohl das Einlegen des höchsten Vorwärtsgangs durch Verlagerung des Steuerfingers, der den Arm (22A) des Elements (22) betätigt, das der Gabel (16, 17) des höchsten Vorwärtsgangs zugehörig ist, als auch die Steuerung des Rückwärtsgangs mit ungehinderter senkrechter Bewegung des Steuerfingers (32, 34) gegenüber dem Arm (22A) gestattet,
- wobei die Herausnahmescheibe (42) in ihrer Herausnahmestellung, beim Herausnehmen des höchsten Vorwärtsgangs, die ungehinderte Bewegung des Steuerfingers (32, 34) untersagt, um die Steuerung des Rückwärtsgangs zu untersagen, und das Steuerelement (22) betätigt, das der Gabel (16) des höchsten Vorwärtsgangs zugehörig ist.

2. System nach Anspruch 1, **dadurch gekennzeichnet, dass** das Herausnahmesystem (40), an der Grenzfläche zwischen dem Sperrschlüssel (30) und der Herausnahmescheibe (42), einen einziehbaren Finger (60) aufweist, der einerseits eine koordinierte Bewegung des Sperrschlüssels (30) und der Herausnahmescheibe (42) ermöglicht, um die Herausnahmescheibe (42) in die Wählstellung zu bringen, und andererseits eine unabhängige Bewegung der Herausnahmescheibe (42) für den Übergang aus der Wählstellung in die Herausnahmestellung ermöglicht.

3. System nach Anspruch 2, **dadurch gekennzeichnet, dass** der einziehbare Finger (60) fest mit dem Sperrschlüssel (30) oder der Herausnahmescheibe (42) verbunden ist, eine Steuerrippe (44) fest mit dem anderen Element, Sperrschlüssel (30) oder Herausnahmescheibe (42), verbunden ist und der einziehbare Finger (60) auf der Steuerrippe (44) liegt, um die Herausnahmescheibe (42) in die Wählstellung zu bringen.

4. System nach einem der Ansprüche 1 bis 3, **dadurch gekennzeichnet, dass** der Sperrschlüssel (30) die Herausnahmescheibe (42) in die Wählstellung bringt, indem er sie senkrecht zum Steuerelement (22), das der Gabel (16) des höchsten Vorwärtsgangs zugehörig ist, betätigt.

5. System nach Anspruch 3, **dadurch gekennzeichnet, dass** der einziehbare Finger (60) von der Steuerrippe (44) gelöst ist, um die unabhängige Bewegung der Herausnahmescheibe (42) beim Herausnehmen des höchsten Vorwärtsgangs zu ermöglichen.

6. System nach einem der Ansprüche 1 bis 5, **dadurch gekennzeichnet, dass** der Steuerfinger (32, 34) die Herausnahmescheibe (42) in einer Richtung parallel zum Steuerelement (22), das der Gabel (16) des höchsten Vorwärtsgangs zugehörig ist, betätigt, um das Steuerelement (22) beim Herausnehmen dieses Gangs zu betätigen.

7. System nach einem der Ansprüche 1 bis 6, **dadurch gekennzeichnet, dass** die Herausnahmescheibe (42) an dem Steuerelement (22), das der Gabel (16) des höchsten Vorwärtsgangs zugehörig ist, befestigt ist, wobei die Herausnahmescheibe (42) schwenkbar auf dem Steuerelement (22) geführt ist.

8. System nach einem der vorhergehenden Ansprüche, **dadurch gekennzeichnet, dass** eine Rückstellvorrichtung (50) darauf abzielt, die Herausnahmescheibe (42) wieder in die Herausnahmestellung zu bringen.

9. System nach Anspruch 8, **dadurch gekennzeichnet, dass** die Rückstellvorrichtung (50) eine Feder ist, die zwischen der Herausnahmescheibe (42) und dem Steuerelement (22), das der Gabel (16) des höchsten Vorwärtsgangs zugehörig ist, angeordnet ist.
